# EUROPEAN PATENT APPLICATION

(11) **EP 1 955 597 A1**
(43) Date of publication of application: **13.08.2008**
(21) Application number: 07002046.6
(22) Date of filing: 31.01.2007
(51) Int. Cl.: A23C 9/13, A23C 9/158, A23C 11/10, A23C 19/05, A23C 20/00, A23D 7/005, A61K 9/107

(54) **Premix emulsion**

(71) Applicant: DSM IP Assets B.V., 6411 TE Heerlen (NL)
(72) Inventor: The designation of the inventor has not yet been filed
(74) Representative: Rabanus, Birgit

(57) **Abstract**

Sterile oil-in-water emulsion containing a water phase, one or more fat soluble ingredient(s) and one or more emulsifiers selected from the group of caseinates.

## Description

The present invention relates to a premix emulsion, in particular the present invention relates to a premix emulsion that can be used to fortify dairy and similar products (such as soy bean milk products) with vitamins, preferably with vitamins A, D3, E and optionally K.

Exposure of skin to UV light catalyzes the synthesis of Vitamin D3 (Cholecalciferol) from 7-dehydrocholesterol in the human body. Cholecalciferol is transported to the liver where it undergoes a first hydroxylation to 25-hydroxyvitamin D (also denoted by 25(OH)D). Low 25(OH)D level in serum is a measure for vitamin D deficiency. Environmental, cultural, and physiological factors can impair the sunlight-induced synthesis of vitamin D3 so that it might be necessary that vitamin D3 from foods and mainly from dairy products has to replenish the vitamin D3 supply to the liver. Most humans at some time in their life are therefore reliant on vitamin D3 supplementation and vitamin D3 enriched foods.

Vitamin D3 is a fat-soluble vitamin with the potential for toxicity if it is chronically consumed at very high doses; therefore the addition of vitamin D3 to foods is very carefully regulated in some countries, e. g. in Canada and the United States.

Cross-sectional studies suggested that current US/Canadian fortification practices are not effective in preventing hypovitaminosis D, particularly among vulnerable populations during winter. The strong association between vitamin D insufficiency and risks of chronic diseases has raised concerns regarding the efficacy of current fortification mechanisms, such as milk fortification, in the United States and Canada to prevent low circulating concentrations of vitamin D3. Chronic disease risks were linked directly to low vitamin D3 intake, with significantly greater risks of type 1 diabetes mellitus, rheumatoid arthritis, multiple sclerosis, and hip fractures.

The fortification of foods in the marketplace is in constant flux, and the added vitamin D content of fluid milk varies significantly with the procedures used to fortify the milk (see e.g. N Engl J Med. 1993 Nov 11; 329 (20):1507). These procedures include general storage conditions for the vitamin preparation (premix), the method used to add vitamin D to the milk, and the point during processing at which the vitamin D preparation is added to the milk. Standardization of such processes among dairies from state to state and from province to province might significantly improve the quality control of vitamin D fortification of milk. Surveys examining the compliance of dairies with vitamin D fortification regulations in the United States and Canada indicated that a large proportion of the samples were not in compliance, with most of those samples being underfortified or overfortified with vitamin D (see e.g. N Engl J Med. 1992 Apr 30; 326 (18):1178-81). Similar observations have been made in other continents (see e.g. Asia Pac J Clin Nutr. 2004; 13 (Suppl): S165).

Milk or similar liquids need to be sterilized or pasteurized in order to avoid microbial growth during the shelf life period. Traditional heat treatment in bottles may not only affect taste and flavor of the product but is also not very compatible with modern continuous processing methods. State of the art is aseptic filling of heat treated milk into aseptic containers, very commonly into cardboard containers (such as Tetrapak® containers). In these systems the heat treatment of the milk is continuously performed before the milk is supplied to a series of filling machines where the milk is aseptically packed into sales packages. With these systems it is impossible to add any not sterilized ingredients to the milk flow after the heat treatment of the milk, i.e. directly before the packaging machine. As a consequence, the filling machines cannot run with different products at the same time. In addition, complete cleaning of the whole system is required prior to each change of the product type. These major drawbacks are overcome by the so-called FlexDos® Unit 2000 (FDU 2000), a dosing unit which is offered by Tetra Pak Arom Pak.

FDU 2000 can be integrated into existing Tetra Pak processing equipment and is placed immediately before a filling machine. The unit is able to add (heat) sensitive additives and functional ingredients, such as flavorings, aromas, lactose, prebiotic cultures, nutrients, Omega-3 fatty acids and/or vitamins, in a safe and aseptic environment and with extreme accuracy to products such as milk and juice.

The main advantages of the system are that no additional mixing tanks are needed, that the additives are not destroyed by heat in the pasteurization or sterilization phase and that there is no need to extra cleaning before the filling of the next product and/or size.

Although a dosing system such as FlexDos® has a lot of advantages there are still some issues to be solved:
• The preparations of the additives and/or functional ingredients (premixes) have to be liquid, preferably with a low viscosity of about 20 to 200 mPa·s during their whole storage time in order to be processable.
• The distribution of the ingredients in the premix has to be as homogeneous as possible in order to assure a continuously accurate dosage during the application of the premix.
• The additives and/or functional ingredients have to be stable during their whole storage time.
• Only additives that are acceptable as food ingredients may be used in the premix.

It was therefore an object of the following invention to provide a new premix composition that solves one or more of the above mentioned issues.

It has surprisingly been found that the object of the present invention is achieved by a sterile oil-in-water emulsion containing a water phase, one or more fat soluble ingredient(s) and one or more emulsifiers selected from the group of caseinates.

It was not to be foreseen by the person skilled in the art that oil-in-water emulsions according to the present invention would solve the above mentioned issues.

The emulsion according to the present invention is manufactured by blending the hydro- (water) soluble components with the fat soluble components. The oil-in-water emulsion is then prepared by known emulsifying technologies. The emulsion and/or its components are sterilised and then aseptically filled in containers specifically designed for use in an aseptic filling system for milk or similar products.

In a preferred embodiment of the present invention the fat soluble ingredient(s) (one or more compounds) are selected from the group of fat (lipid) soluble vitamins, more preferred from vitamin A, vitamin D3, vitamin E and/or derivatives thereof that are acceptable as food ingredients. Especially preferred is a mixture of vitamin A, vitamin D3 and vitamin E. A preferred example for the last is a blend of retinyl acetate or retinyl palmitate, cholecalciferol and alpha-tocopheryl acetate.

The ratio of vitamin A (mg retinol equivalents) / vitamin D3 (mg cholecalciferol) / vitamin E (mg RRR-alpha-tocopherol equivalents) is preferably selected as follows: 1 / 0.0025 to 0.025 / 2.5 to 25, more preferably 1 / 0.005 to 0.025 / 7.5 to 20 with regard to the weight of the vitamins, respectively:

| | **preferred** | **more preferred** |
|---|---|---|
| vitamin A | 1 | 1 |
| vitamin D3 | 0.0025-0.025 | 0.005 - 0.025 |
| Vitamin E | 2.5-25 | 7.5-20 |

According to the present invention it is advantageous if the amount of vitamin A in the emulsion is in the range of 0.25 to 2.5 % by weight, based on the total weight of the composition. If vitamins D3 and E are also present in the emulsion according to the present invention their preferred amounts result from the ratios given above.

It is further preferred to additionally incorporate vitamin K into the emulsion according to the present invention. The term "vitamin K" denotes a group of vitamins that are needed for the posttranslational modification of certain proteins, mostly required for blood coagulation. It is preferred to use the fat (lipid) soluble forms and derivatives of this vitamin, such as vitamin K1 (phytomenadione) and/or vitamin K2.

The term "caseinates" as used herein relates to salts of casein proteins with bases. Salts with alkali metals (especially sodium, potassium) and alkaline earth metals (especially calcium) are preferred.
The term "casein proteins" as used herein comprises all members of the fractions of milk proteins designated caseins, known to a person skilled in the art, comprising alpha-, beta-, gamma-, kappa- and lambda-caseins as sub-groups, taken individually or in the form of naturally occurring or synthetically prepared mixtures thereof. Within these subgroups a multitude of genetic variations exist depending on the type and breed of animal as source of the milk. In connection with the present invention milk from all kinds of mammals including humans can be used as source of the casein. The preferred source is milk from cows. The casein proteins apart from being distinguished by their amino acid sequences and their tendency to form dimers, trimers and higher oligomers, are carrying different amounts of phosphate and carbohydrate groups. Among the carbohydrate groups are galactose, galactosamine and N-acetyl-neuraminic acid groups. Sodium caseinates are especially preferred.

According to the present invention it is possible to modulate the viscosity by choice of the caseinate used. Advantageously a desired viscosity is adjusted by choice of the caseinate used. It is preferred to adjust a low viscosity, i.e. a viscosity of about 20 to 200 mPa·s.

According to the present invention it is advantageous if the amount of caseinate(s) (one or more compounds) in the emulsion is in the range of from 2 to 5 % by weight, preferably from 2.5 to 4.5 % by weight, each based on the total weight of the emulsion.

The oil phase of the emulsions according to the present invention advantageously contains one or more edible oil(s), preferred plant (vegetable) oils. Preferred are sunflower oil, coconut oil, corn oil, cottonseed oil, canola oil, rapeseed oil, olive oil, palm oil, peanut oil, safflower oil, sesame oil, soybean oil, nut oils (such as almond oil, cashew oil, hazelnut oil, macadamia oil, pecan oil, pistachio oil, walnut oil) including fractionated qualities thereof.

According to the present invention it is advantageous if the amount of edible oil(s) (one or more compounds) in the emulsion is in the range of 40 to 60 % by weight, preferably from 45 to 55 % by weight, each based on the total weight of the composition.

It is especially preferred to use the emulsions according the present invention as premixes to fortify dairy products or similar products such as soy bean milk products with the help of a dosage system that is placed immediately before or integrated in a filling machine, especially preferred is the use of emulsions according the present invention as a premix to fortify dairy or similar products with the help of a FlexDos® Unit 2000.

Accordingly a further object of the present invention is a method of fortifying dairy or similar products said method comprising the steps of
a. pasteurizing a bulk of raw milk or of a similar product (hereinafter collectively referred to as "liquid") to reduce the number of harmful micro organisms;
b. optionally homogenizing the bulk of liquid to prevent the separation of the fat and water phases (creaming) of the liquid;
c. adding a sterile oil-in-water emulsion containing a water phase, one or more fat soluble ingredient(s) and one or more emulsifiers selected from the group of caseinates to the so-treated liquid immediately before filling it into the sales package.

The term "sales package" as used herein comprises all kinds of containers that are sold to the end consumer (customer) or user of the fortified dairy product, e.g. glass and plastics containers, such as glass and plastic bottles, plastic bags, plastic jugs and so on, cartons, such as waxed cardboard boxes, boxes formed from multilayer cardboard foils, including packaging systems such as Elopak systems, SIG Combibloc, TetraPak® systems etc., metal cans and the like.

Preferred dairy products are milk, buttermilk, soured milk, milk shakes, fermented milk, yoghurts, yoghurt drinks, cream, sour cream, ice cream, cheese, cottage cheese, butter; preferred "similar products" are soy bean milk products, such as soy milk, bean curd (tofu) and so on.

It was not to be foreseen by the person skilled in the art that it would not be necessary to subsequently sterilise or pasteurise the fat soluble ingredients that are added to the dairy products if they are added to the product with the help of an emulsion according to the present invention.

It is preferred to use 0.25 - 2.5 mg of the premix to enrich one (1) unit of the dairy product (100 - 1000 ml), each depending on national fortifying regulations.

### Examples:

| **Ingredient** | **% by weight** | **% by weight** | **% by weight** |
|---|---|---|---|
| Water | 46.189 | 55.602 | 35.025 |
| Sunflower oil | 48.148 | 41.000 | 59.000 |
| Sodium Caseinate | 3.800 | 2.600 | 4.400 |
| Vitamin A palmitate 1.7 m. IU/g | 0.188 | 0.094 | 0.176 |
| Vitamin D3 cryst. 40 m. IU/g | 0.024 | 0.048 | 0.024 |
| dl-α-tocopheryl acetate | 1.640 | 0.656 | 1.375 |
| Vitamine K1 | 0.011 | - | - |

## Claims

1. Sterile oil-in-water emulsion containing a water phase, one or more fat soluble ingredient(s) and one or more emulsifiers selected from the group of caseinates.

2. Emulsion according to claim 1 **characterized in that** the fat soluble ingredient(s) (one or more compounds) are selected from the group of fat (lipid) soluble vitamins.

3. Emulsion according to claim 2 **characterized in that** the fat (lipid) soluble vitamins are selected from the group consisting of vitamin D, vitamin A, vitamin E and/or derivatives thereof that are acceptable as food ingredients.

4. Emulsion according to any of the preceding claims **characterized in that** it contains a mixture of vitamin D, vitamin A, vitamin E and/or derivatives thereof that are acceptable as food ingredients.

5. Emulsion according to any of the preceding claims **characterized in that** it further contains vitamin K1 and/or vitamin K2.

6. Emulsion according to any of the preceding claims **characterized in that** the amount of caseinate(s) (one or more compounds) in the emulsion is in the range of from 2 to 5 % by weight, based on the total weight of the emulsion.

7. Emulsion according to any of the preceding claims **characterized in that** the amount of caseinate(s) (one or more compounds) in the emulsion is in the range of from 2.5 to 4.5 % by weight, based on the total weight of the emulsion.

8. Use of emulsions according to any of the preceding claims as a premix to fortify dairy products and similar products.

9. Use according to claim 8 wherein the fortification is carried out with the help of a dosage system that is placed immediately before or integrated in a filling machine.

10. Use according to claim 8 **characterized in that** the dairy product is selected from the group consisting of milk, buttermilk, soured milk, milk shakes, fermented milk, yoghurts, yoghurt drinks, cream, sour cream, ice cream, cheese, cottage cheese, butter.

11. Use according to claim 8 **characterized in that** the similar product is selected from the group consisting of soy bean milk products.

12. Method of fortifying dairy products said method comprising the steps of
a. pasteurizing a bulk of raw milk or of a similar product (hereinafter collectively referred to as "liquid") to reduce the number of harmful micro organisms;
b. optionally homogenizing the bulk of liquid to prevent the separation of the fat and water phases (creaming) of the liquid;
c. adding a sterile oil-in-water emulsion containing a water phase, one or more fat soluble ingredient(s) and one or more emulsifiers selected from the group of caseinates to the so-treated liquid immediately before filling it into the sales package.
